# EUROPÄISCHE PATENTANMELDUNG

(11) **EP 4 715 504 A1**
(43) Veröffentlichungstag der Anmeldung: **25.03.2026**
(21) Anmeldenummer: 24201436.3
(22) Anmeldetag: 19.09.2024
(51) Int. Cl.: G05B 19/418

(54) **VERFAHREN ZUM KALIBRIEREN EINER PHYSIKALISCHEN EINHEIT UND SYSTEM ZUM KALIBRIEREN UND ZUR JUSTAGE EINER PHYSIKALISCHEN EINHEIT**

(71) Anmelder: Bürkert Werke GmbH & Co. KG, 74653 Ingelfingen (DE)
(72) Erfinder: März, Anne, 74653 Ingelfingen (DE)
(74) Vertreter: Prinz & Partner mbB

(57) **Zusammenfassung**

Die Erfindung betrifft ein Verfahren zum Kalibrieren einer physikalischen Einheit (12) und ein System (10) zum Kalibrieren und zur Justage einer physikalischen Einheit (12). Die physikalische Einheit (12) ist in einer realen Prozessumgebung (14) angeordnet. Eine virtuelle Komponente (26) wird bereitgestellt, die in einer virtuellen Prozessumgebung (24) vorgesehen ist. Die virtuelle Prozessumgebung (24) ist korrespondierend zur realen Prozessumgebung (14) ausgebildet, sodass sich die in der realen Prozessumgebung (14) angeordnete physikalische Einheit (12) korrespondierend zur virtuellen Komponente (26) in der virtuellen Prozessumgebung (24) verhält. Eine Messung wird mit der physikalischen Einheit (12) durchgeführt, um einen realen Messwert zu erhalten. Eine Messung wird mit der virtuellen Komponente (26) simuliert, um einen virtuellen Messwert zu erhalten. Ein Offset wird durch eine Überprüfungseinheit (30) basierend auf einem Vergleich des realen Messwerts und des virtuellen Messwerts ermittelt. Der reale Messwert und der virtuelle Messwert sind zueinander korrespondierend. Die physikalische Einheit (12) wird durch die Überprüfungseinheit (30) anhand des Offsets zumindest derart kalibriert, dass auf dem Offset basierende Kompensationsdaten für zukünftige Messwerte der physikalischen Einheit (12) berücksichtigt werden.

## Beschreibung

Die Erfindung betrifft ein Verfahren zum Kalibrieren einer physikalischen Einheit und ein System zum Kalibrieren und zur Justage einer physikalischen Einheit.

Um exakte und zuverlässige Messwerte erlangen zu können, müssen physikalische Einheiten, beispielsweise Messeinheiten, entweder zeit- oder eventbasiert kalibriert oder justiert werden. Eine zeitbasierte Kalibrierung kann dabei in regelmäßigen Zeitabständen oder zu diskreten Zeitpunkten erfolgen. Eine eventbasierte Kalibrierung kann dagegen von einer festgestellten Differenz zwischen einem Istwert der physikalischen Einheit und dem zugehörigen Sollwert abhängen. Wenn die Differenz zu groß wird, kann eine Kalibrierung ausgelöst werden. Auch kann die eventbasierte Kalibrierung durch ein äußeres Ereignis ausgelöst werden, bspw. eine Umgebungstemperatur, ein Druckverhältnis oder durch eine manuelle Betätigung.

In diesem Zusammenhang ist unter einer Kalibrierung ein Vergleich und/oder Abgleich mit einer physikalischen Referenz für die physikalische Einheit zu verstehen, die den Sollwert vorgibt. Es wird dann ermittelt, wie stark sich die mit der physikalischen Einheit erfassten Messwerte von den Messwerten unterscheiden, die mit der physikalischen Referenz erhalten werden.

Unter einer Justage ist ein Eingriff in das Gerät zu verstehen, um eine Präzision der Messungen wieder zu erhöhen. Dies kann durch wartungstechnische Handlungen und/oder durch Einspielen aktualisierter Betriebsparameter erfolgen, die unmittelbar Auswirkungen darauf haben, wie die Messwerte erfasst werden, wodurch die Präzision erhöht werden kann. Beispielsweise ist eine Justage aufgrund von Alterungsprozessen der physikalischen Einheit oder aufgrund von sich stark ändernden externen Umgebungsbedingungen erforderlich.

Nach bisherigen Ansätzen ist es erforderlich, dass die physikalische Einheit aus der zugrundeliegenden Anlage, die beispielweise Teil einer Prozessumgebung ist, ausgebaut wird, damit die physikalische Einheit mit der physikalischen Referenz an einem gemeinsamen Ort unter gleichen Bedingungen abgeglichen werden kann. Dies hat in der Regel einen Stillstand der Anlage oder zumindest eine eingeschränkte Betriebsfähigkeit der Anlage zur Folge, wodurch die Effizienz der Anlage reduziert ist.

Die Aufgabe der Erfindung ist es, die Effizienz der Anlage zu erhöhen.

Die Aufgabe wird erfindungsgemäß gelöst durch ein Verfahren zum Kalibrieren einer physikalischen Einheit. Die physikalische Einheit ist in einer realen Prozessumgebung angeordnet, beispielsweise in einer Anlage wie einer Prozessanlage. Das Verfahren umfasst zumindest die nachfolgenden Schritte.

Eine virtuelle Komponente wird bereitgestellt, die in einer virtuellen Prozessumgebung ausgebildet ist. Die virtuelle Komponente wird demnach in digitaler Weise bereitgestellt, weswegen die virtuelle Komponente auch als digitale Komponente bezeichnet werden kann. Die virtuelle Prozessumgebung ist korrespondierend zur realen Prozessumgebung ausgebildet, sodass sich die in der realen Prozessumgebung angeordnete physikalische Einheit korrespondierend zur virtuellen Komponente in der virtuellen Prozessumgebung verhält. Insofern wird die reale Prozessumgebung virtuell nachgebildet, um die virtuelle Prozessumgebung zu erhalten. Mit anderen Worten stellt die virtuelle Prozessumgebung eine virtuelle Nachbildung der realen Prozessumgebung dar.

Eine reale Messung wird mit der physikalischen Einheit in der realen Prozessumgebung durchgeführt, um einen realen Messwert zu erhalten.

Eine Messung mit der virtuellen Komponente in der virtuellen Prozessumgebung wird simuliert, um einen virtuellen Messwert zu erhalten. Bei dem virtuellen Messwert handelt es sich also um einen simulierten Messwert der virtuellen Komponente in der virtuellen Prozessumgebung.

Ein Offset wird durch eine Überprüfungseinheit basierend auf einem Vergleich des realen Messwerts und des virtuellen Messwerts ermittelt. Der reale Messwert entspricht einem Istwert der physikalischen Einheit, wohingegen der virtuelle Messwert ein Sollwert für die physikalische Einheit ist. Somit führt die Überprüfungseinheit einen Vergleich zwischen dem Istwert und dem Sollwert durch, um die Abweichung, also den Offset, festzustellen. Der Offset wird anschließend genutzt, um die Kompensationsdaten zu ermitteln, die angeben, wie die realen Messwerte in Bezug auf die Sollwerte zu interpretieren sind. Der reale Messwert und der virtuelle Messwert sind zueinander korrespondierend. Anders ausgedrückt wird der reale Messwert (Istwert) mit dem zugehörigen virtuellen Messwert (Sollwert) verglichen.

Die physikalische Einheit wird durch die Überprüfungseinheit anhand des Offsets zumindest derart kalibriert, dass auf dem Offset basierende Kompensationsdaten für zukünftige Messwerte der physikalischen Einheit berücksichtigt werden. Basierend auf der festgestellten Abweichung, also dem Offset, werden Kompensationsdaten ermittelt und zumindest für zukünftige Messwerte der physikalischen Einheit berücksichtigt. Zusätzlich können die Kompensationsdaten auch zur nachträglichen Korrektur bereits erhaltener Messwerte von der physikalischen Einheit genutzt werden. In jedem Fall können aufgrund der Korrektur genauere Messwerte der physikalischen Einheit erhalten werden.

Das Verfahren basiert auf der Erkenntnis, dass eine virtuelle Prozessumgebung entworfen werden kann, die korrespondierend zur realen Prozessumgebung ist, also eine Nachbildung der realen Prozessumgebung ist. Die virtuelle Komponente, die korrespondierend zur physikalischen Einheit ist, weist ein zeitliches Verhalten auf, das dem zeitlichen Verhalten der physikalischen Einheit entspricht.

Auch wenn sich die virtuelle Komponente in der virtuellen Prozessumgebung generell korrespondierend zur physikalischen Einheit in der realen Prozessumgebung verhält, so können unbekannte, auf die physikalische Einheit einwirkende Einflussfaktoren auftreten, beispielsweise nicht-vorhersehbare Änderungen der Umgebungsbedingungen, welche zu einer Abweichung zwischen dem zeitlichen Verhalten der physikalischen Einheit und dem zeitlichen Verhalten der virtuellen Komponente führen. Auch können Effekte bedingt durch Alterung bzw. Verschleiß der physikalischen Einheit, die bei der virtuellen Komponente nicht berücksichtigt werden, zu Abweichungen führen. Die anhand der physikalischen Einheit erhaltenen realen Messwerte stimmen dann im Allgemeinen nicht mit den anhand der virtuellen Komponente simulierten virtuellen Messwerten überein, sodass es zu der Abweichung kommt.

Die Kompensationsdaten müssen nicht in die physikalische Einheit geschrieben werden, sondern können von einer mit der physikalischen Einheit verbundenen Vorrichtung berücksichtigt werden, beispielsweise einer Auswertevorrichtung. Insbesondere kann dadurch eine Justage der physikalischen Einheit, also das Aufspielen von aktualisierten Betriebsparametern oder das Ausführen von Wartungsarbeiten an der physikalischen Einheit, zumindest für einen gewissen Zeitraum vermieden werden, wodurch die Effizienz der physikalischen Einheit und damit diejenige der Anlage erhöht wird, in der die physikalische Einheit verwendet wird.

Der wesentliche Vorteil des Verfahrens besteht darin, dass der Betrieb der physikalischen Einheit bzw. der Anlage, in der die physikalische Einheit vorgesehen ist, uneingeschränkt möglich bleibt, also nicht unterbrochen werden muss.

Die physikalische Einheit kann eine Messeinheit aufweisen, insbesondere einen Sensor oder ein Sensor-Aktor-System, bspw. einen Massendurchflussregler. Die physikalische Einheit kann auch ein Feldgerät sein, das eine entsprechende Messeinheit umfasst.

In (prozesstechnischen) Anlagen ist häufig eine große Anzahl derartiger physikalischer Einheiten implementiert, sodass das Verfahren eine große Effizienzsteigerung ermöglicht, da das Verfahren auf sämtliche der physikalischen Einheiten anwendbar ist. Insofern muss die Anlage zur Kalibrierung der physikalischen Einheiten nicht zumindest teilweise deaktiviert werden.

Unter der realen Prozessumgebung ist die tatsächliche Umgebung zu verstehen, innerhalb der die physikalische Einheit angeordnet ist, also in der Anlage, beispielsweise in einer Fabrik. Die reale Prozessumgebung weist im Umfeld der physikalischen Einheit herrschende Umgebungseigenschaften auf, die die Betriebsweise der physikalischen Einheit beeinflussen, beispielsweise eine Temperatur, ein Druck, Lichtverhältnisse, Substanzen, elektromagnetische Störfelder und andere Umgebungsparameter. Durch die verschiedenen Einflussfaktoren wird die Betriebsweise der physikalischen Einheit über die Zeit beeinflusst. Insbesondere kann die physikalische Einheit aufgrund der Umgebungseigenschaften ein zeitlich variierendes Verhalten aufweisen.

Die virtuelle Prozessumgebung ist der realen Prozessumgebung nachempfunden, sodass die in der realen Prozessumgebung herrschenden Umgebungseigenschaften in der virtuellen Prozessumgebung für die virtuelle Komponente simuliert werden. Dies führt dazu, dass die virtuelle Komponente ein Verhalten aufweist, das den Auswirkungen der Umgebungseigenschaften der realen Prozessumgebung nachempfunden ist. Anders ausgedrückt kann die virtuelle Prozessumgebung als Simulation der realen Prozessumgebung angesehen werden.

Generell kann der physikalischen Einheit eine physikalische Referenz zugeordnet sein. Die physikalische Referenz ist in einer realen Laborumgebung angeordnet, weshalb die physikalische Referenz auch als reale Referenz bezeichnet wird. In der realen Laborumgebung herrschen, anders als in der realen Prozessumgebung, definierte und gleichbleibende Umgebungsbedingungen. Das bedeutet, dass sich die reale Prozessumgebung von der realen Laborumgebung unterscheidet. Die physikalische Referenz gibt zu jedem Zeitpunkt den richtigen Wert aus.

Die physikalische Referenz unterscheidet sich von der physikalischen Einheit insbesondere hinsichtlich der Messpräzision. Die physikalische Referenz weist im Allgemeinen eine Messpräzision auf, die mindestens zehn Mal höher ist als die Messpräzision der physikalischen Einheit.

Die virtuelle Komponente kann indirekt oder direkt mit der physikalischen Referenz für die physikalische Einheit abgeglichen werden, wodurch die hohe Genauigkeit der physikalischen Referenz für die virtuelle Komponente genutzt wird, was dann für die Kalibrierung der physikalischen Einheit mittels der virtuellen Komponente genutzt wird. Da die virtuelle Komponente für die Kalibrierung genutzt wird, ist es nicht notwendig, dass die physikalische Einheit und/oder die physikalische Referenz aus ihrer jeweiligen Umgebung entnommen wird.

Ein Aspekt sieht vor, dass die virtuelle Komponente eine virtuelle Referenz ist, die einer der physikalischen Einheit zugeordneten physikalischen Referenz nachgebildet ist. Die physikalische Referenz ist in der realen Laborumgebung angeordnet. Demgegenüber ist die virtuelle Referenz in der virtuellen Prozessumgebung angeordnet. Die reale Prozessumgebung unterscheidet sich von der realen Laborumgebung, wie vorstehend schon erläutert.

In dieser Ausgestaltung des Verfahrens weist die virtuelle Referenz die Eigenschaften der physikalischen Referenz für die physikalische Einheit auf, also insbesondere die höhere Messgenauigkeit der physikalischen Referenz im Vergleich zur physikalischen Einheit. Die physikalische Einheit wird dann direkt basierend auf der virtuellen Referenz kalibriert. Insofern unterscheidet sich die virtuelle Referenz von der physikalischen Referenz nur hinsichtlich ihrer jeweiligen Umgebung, da die virtuelle Referenz in der virtuellen Prozessumgebung vorgesehen ist, also der Umgebung, die korrespondierend zur realen Prozessumgebung ist, in der die physikalische Einheit vorgesehen ist. Dagegen ist die physikalische Referenz in der realen Laborumgebung vorgesehen, die sich von der realen Prozessumgebung unterscheidet.

Es wird also das Verhalten der physikalischen Referenz in der realen Prozessumgebung durch die virtuelle Referenz in der virtuellen Prozessumgebung simuliert. Da die reale Prozessumgebung von der realen Laborumgebung abweichende Umgebungsbedingungen aufweist, verhält sich die physikalische Referenz in der realen Prozessumgebung abweichend von einem Verhalten der physikalischen Referenz in der realen Laborumgebung. Es wird somit das Verhalten der physikalischen Referenz in der Umgebung simuliert, in der sich die physikalische Einheit befindet.

Das Verhalten der physikalischen Referenz in der realen Prozessumgebung wird nachgebildet. In der Simulation kann dazu ein Umgebungsoffset berücksichtigt werden, der den Wechsel der Umgebung zwischen der realen Laborumgebung und der realen Prozessumgebung widerspiegelt.

Demnach würde sich die virtuelle Referenz in einer virtuellen Laborumgebung, die der realen Laborumgebung nachempfunden ist, korrespondierend zur physikalischen Referenz in der realen Laborumgebung verhalten.

Unter Berücksichtigung des zusätzlichen Umgebungsoffsets zwischen der virtuellen Laborumgebung und der virtuellen Prozessumgebung kann dann das Verhalten der virtuellen Referenz der virtuellen Prozessumgebung ermittelt werden, das insofern zum Verhalten der physikalischen Referenz in der realen Prozessumgebung korrespondiert, weshalb eine Kalibrierung der physikalischen Einheit möglich ist.

Der Umgebungsoffset kann basierend auf den Umgebungsbedingungen zwischen der realen Prozessumgebung und der realen Laborumgebung ermittelt werden, beispielsweise durch die Überprüfungseinheit. In einer Alternative kann der Umgebungsoffset selbstverständlich auch durch eine andere Vorrichtung ermittelt werden und anschließend an die Überprüfungseinheit übermittelt werden.

In einer anderen Ausgestaltung des Verfahrens handelt es sich bei der virtuellen Komponente um eine virtuelle Einheit, die der physikalischen Einheit nachgebildet ist. Es handelt sich also bei der virtuellen Komponente um einen digitalen Zwilling der physikalischen Einheit. Die virtuelle Einheit ist in der virtuellen Prozessumgebung ausgebildet, sodass sich die in der virtuellen Prozessumgebung ausgebildete virtuelle Einheit korrespondierend zu der in der realen Prozessumgebung angeordneten physikalischen Einheit verhält. Im Endeffekt ist die virtuelle Komponente in dieser Ausgestaltung des Verfahrens eine Simulation der physikalischen Einheit. Da die virtuelle Prozessumgebung der realen Prozessumgebung nachempfunden ist, verhält sich die virtuelle Einheit korrespondierend zur physikalischen Einheit. Aufgrund des korrespondierenden Verhaltens der virtuellen Einheit und der physikalischen Einheit, kann die virtuelle Einheit in diesem Fall aufwandsarm zur Kalibrierung der physikalischen Einheit genutzt werden.

Beispielsweise ist in dieser Ausgestaltung des Verfahrens zusätzlich eine virtuelle Referenz vorgesehen, die einer der physikalischen Einheit zugeordneten physikalischen Referenz nachgebildet ist. Die physikalische Referenz ist, wie vorstehend schon erläutert, in der realen Laborumgebung angeordnet, wohingegen die virtuelle Referenz in diesem Fall in einer virtuellen Laborumgebung angeordnet ist, die korrespondierend zur realen Laborumgebung ausgebildet ist. Die reale Prozessumgebung unterscheidet sich von der realen Laborumgebung. Es werden somit zwei virtuelle Komponenten simuliert, nämlich die virtuelle Einheit und die virtuelle Referenz. Die jeweiligen Umgebungen der virtuellen Komponenten stellen Nachbildungen der realen Umgebungen der zugeordneten physikalischen Komponenten dar. Die virtuelle Einheit ist in der virtuellen Prozessumgebung angeordnet, die eine Nachbildung der realen Prozessumgebung ist, in der die physikalische Einheit vorgesehen ist, wohingegen die virtuelle Referenz in der virtuellen Laborumgebung angeordnet ist, die eine Nachbildung der realen Laborumgebung ist, in der die physikalische Referenz vorgesehen ist. Mit anderen Worten wird für die beiden physikalischen Komponenten ein entsprechender digitaler Zwilling erzeugt, der in einer simulierten Nachbildung der Umgebung der physikalischen Komponente vorgesehen ist.

Insbesondere verhält sich die virtuelle Referenz in der virtuellen Laborumgebung korrespondierend zur physikalischen Referenz in der realen Laborumgebung. Dadurch ist der Simulationsaufwand für die virtuelle Referenz gegenüber der Ausführungsform reduziert, in der die virtuelle Referenz in der virtuellen Prozessumgebung angeordnet ist.

Optional gleicht die Überprüfungseinheit, vor dem Kalibrieren der physikalischen Einheit mittels der virtuellen Einheit, die virtuelle Einheit mit der virtuellen Referenz ab. Insbesondere überprüft die Überprüfungseinheit, ob die virtuelle Einheit mit der virtuellen Referenz übereinstimmt. Sollte dies nicht der Fall sein, so wird die Kalibrierung derart ausgeführt, dass zunächst die virtuelle Einheit mit der virtuellen Referenz kalibriert wird, die in der virtuellen Laborumgebung angeordnet ist. Anschließend kann die derart kalibrierte virtuelle Einheit genutzt werden, um die physikalische Einheit zu kalibrieren, die in der realen Prozessumgebung angeordnet ist.

Mit anderen Worten kann eine virtuelle Kalibrierung vorgenommen werden, indem Kompensationsdaten für die virtuelle Einheit basierend auf der virtuellen Referenz bereits ermittelt werden. Die Kompensationsdaten können wie vorstehend bereits erläutert berechnet werden. Die physikalische Einheit kann dann in einfacher Weise kalibriert werden, indem die bereits vorliegenden Kompensationsdaten, die zuvor ermittelt wurden, lediglich angewandt bzw. aufgespielt werden, sofern eine Abweichung zwischen der physikalischen Einheit und der virtuellen Einheit festgestellt worden ist. Mit anderen Worten erfolgt dann lediglich eine Synchronisierung zwischen der physikalischen Einheit und der virtuellen Einheit, da die virtuelle Einheit bereits anhand der virtuellen Referenz kalibriert wurde, also im kalibrierten Zustand ist.

Ferner kann die Überprüfungseinheit die virtuelle Referenz, insbesondere vor dem Kalibrieren der physikalischen Einheit mittels der virtuellen Einheit, mit der physikalischen Referenz abgleichen. Dabei überprüft die Überprüfungseinheit von der physikalischen Referenz vorgegebene Referenz-Sollwerte mit virtuellen Referenz-Istwerten der virtuellen Referenz. Stellt die Überprüfungseinheit ein Referenzoffset zwischen den physikalischen Referenzwerten der physikalischen Referenz, also den Referenz-Sollwerten, und den virtuellen Referenzwerten der virtuellen Referenz, also den Referenz-Istwerten, fest, so ermittelt die Überprüfungseinheit basierend auf dem Referenzoffset Referenzkompensationsdaten, die anschließend bei der Interpretation der virtuellen Referenzwerte der virtuellen Referenz berücksichtigt werden. Wie vorstehend schon erläutert, kann hierbei zudem ein Umgebungsoffset berücksichtigt werden, sofern die virtuelle Referenz in der virtuellen Prozessumgebung anstatt der virtuellen Laborumgebung angeordnet ist.

Die Überprüfungseinheit kann die virtuelle Referenz mit der physikalischen Referenz in zeitlich regelmäßigen Zeitintervallen abgleichen. Die entsprechenden Zeitintervalle können anhand einer Nutzereingabe vorgebbar sein.

Gemäß einem Aspekt berücksichtigt die Überprüfungseinheit einen von der virtuellen Laborumgebung der virtuellen Referenz abhängigen Umgebungsoffset. Durch den Umgebungsoffset kann das Verhalten der virtuellen Referenz wahlweise in der virtuellen Prozessumgebung oder in der virtuellen Laborumgebung simuliert werden. Der Umgebungsoffset ermöglicht es insbesondere, die virtuelle Komponente als virtuelle Referenz in der virtuellen Prozessumgebung zu nutzen, wodurch eine Simulierung der virtuellen Einheit ausbleiben kann.

In einigen Ausführungsformen kalibriert die Überprüfungseinheit die physikalische Einheit mit der virtuellen Komponente, sofern eine event- und/oder zeit-basierte Auslösebedingung erfüllt ist.

Die eventbasierte Auslösungsbedingung betrifft insbesondere den Offset zwischen einem realen Messwert und einem dazu korrespondierenden virtuellen Messwert. In diesem Fall vergleicht die Überprüfungseinheit den Offset zwischen dem realen Messwert und dem virtuellen Messwert mit einem Differenzschwellenwert. Ist der Betrag des Offsets größer als der Betrag des Differenzschwellenwerts, wird das Verfahren ausgelöst. Die Überprüfung des Offsets kann von der Überprüfungseinheit in regelmäßigen Zeitabständen oder zu diskreten Zeitpunkten durchgeführt werden.

Optional ist der Differenzschwellenwert vorgebbar, insbesondere einstellbar. Beispielsweise kann der Differenzschwellenwert durch eine Wartungsperson bedarfsgerecht eingestellt werden. Die eventbasierte Auslösebedingung gewährleistet, dass der Kalibrierungsaufwand reduziert ist, da die Kalibrierung nur im Bedarfsfall durchgeführt werden muss.

In einer Alternative kann die eventbasierte Auslösebedingung auch eine Nutzereingabe umfassen, also ein manuelles Auslösen.

Ferner kann die eventbasierte Auslösebedingung auf einem äußeren Ereignis basieren, bspw. einer Umgebungstemperatur und/oder einem Druckverhältnis.

Die zeitbasierte Auslösebedingung betrifft eine Kalibrierung der physikalischen Einheit in zeitlich vorgebbaren Zeitintervallen. Die Zeitintervalle können durch eine Wartungsperson angepasst und eingestellt werden. Das bedeutet, dass die Kalibrierung unabhängig von dem zuvor erwähnten Offset durchgeführt wird. Die zeitbasierte Auslösungsbedingung gewährleistet eine kontinuierliche Kalibrierung der physikalischen Einheit.

Das bedeutet, dass die Überprüfungseinheit die Kalibrierung der physikalischen Einheit mit der virtuellen Komponente:
- in regelmäßigen, vorgebbaren Zeitintervallen auslöst, und/oder
- auslöst, wenn die Überprüfungseinheit feststellt, dass der Offset größer oder kleiner (je nach Vorzeichen) als ein vorgegebener Schwellenwert ist, und/oder
- als Reaktion auf eine Nutzereingabe auslöst.

Insbesondere ist vorgesehen, dass eine Kalibrierung in den regelmäßigen, vorgebbaren Zeitintervallen durchgeführt werden muss, aber auch dann durchgeführt wird, wenn ein entsprechender Event vorliegt, also eine Nutzereingabe erfolgt ist oder der Betrag des Offsets größer als der Schwellenwert ist.

In einigen Ausführungsformen wird die virtuelle Komponente mit Daten der physikalischen Einheit beaufschlagt, um virtuelle Messwerte zu erhalten. Bei den Daten kann es sich um Eingangsdaten der physikalischen Einheit handeln. Das bedeutet, dass die Eingangsdaten, auf deren Basis die realen Messwerte erhalten werden, ebenfalls für die virtuelle Komponente genutzt werden. Dadurch wird eine gleiche Datenbasis für die physikalische Einheit und die virtuelle Komponente gewährleistet, die ohne abweichende Prozessbedingungen, generell zu einem realen Messwert führen sollte, der zu dem simulierten virtuellen Messwert korrespondiert.

Eine Justage der physikalischen Einheit kann erfolgen, sofern die Kalibrierung der physikalischen Einheit weiterhin einen Offset zur Folge hat. Ob die Kalibrierung der physikalischen Einheit weiterhin einen Offset zur Folge hat, kann von der Überprüfungseinheit erkannt werden, indem innerhalb eines vorgegebenen Zeitintervalls, nach erfolgter Ermittlung und Anwendung der Kompensationsdaten, ein erneuter (aktualisierter) Offset ermittelt wird, der insbesondere größer als ein vorgegebener Differenzschwellenwert ist. Anders ausgedrückt wird nach der erfolgten Kalibrierung der physikalischen Einheit davon ausgegangen, dass der ermittelte Offset einen vorgegebenen Differenzschwellenwert zumindest für ein vorgegebenes Zeitintervall nicht überschreitet oder unterschreitet (je nach Vorzeichen). Ist diese Bedingung nicht erfüllt, so ist eine Justage der physikalischen Einheit erforderlich. In diesem Fall kann die Überprüfungseinheit eine entsprechende Benachrichtigung an den Nutzer ausgeben, dass eine Justage der physikalischen Einheit erforderlich ist.

Insbesondere umfasst die Justage das Aufspielen wenigstens eines neuen Parameters und/oder eine manuelle Anpassung der physikalischen Einheit in der realen Prozessumgebung. Die manuelle Anpassung der physikalischen Einheit kann eine Wartungsmaßnahme umfassen. Das Aufspielen wenigstens eines neuen Parameters kann im Rahmen einer Firmware-Aktualisierung erfolgen.

In einer Ausgestaltung des Verfahrens gibt die Überprüfungseinheit eine Benachrichtigung oder eine Mitteilung aus, sofern ein Kalibrieren der physikalischen Einheit anhand der virtuellen Komponente fehlschlägt. Dass die Kalibrierung der virtuellen Komponente fehlschlägt, kann mehrere Gründe haben, insbesondere, dass:
- von der Überprüfungseinheit ermittelt wird, dass nach dem Ermitteln entsprechender Kompensationsdaten erneut ein nicht vernachlässigbarer Offset (größer/kleiner als ein vorgegebener Differenzschwellenwert) innerhalb eines vorgegebenen Zeitintervalls festgestellt wird, und/oder
- die der physikalischen Einheit zugeordnete virtuelle Referenz nicht erreichbar ist, und/oder
- die der virtuellen Einheit zugeordnete virtuelle Referenz eine Fehlerbenachrichtigung ausgibt, und/oder
- die virtuelle Einheit nicht existiert bzw. nicht erreichbar ist, und/oder
- die virtuelle Einheit eine Fehlerbenachrichtigung ausgibt.

Dadurch können verschiedene Konfigurationen berücksichtigt werden, die dazu führen, dass die physikalische Einheit nicht mit der virtuellen Komponente kalibriert werden kann.

Beispielsweise gibt die Überprüfungseinheit im Falle des Fehlschlagens der Kalibrierung der physikalischen Einheit mit der virtuellen Komponente die Benachrichtigung oder die Mitteilung aus, dass die physikalische Einheit mit einer physikalischen Referenz kalibriert werden muss, die in einer realen Laborumgebung angeordnet ist. Es kann also ebenfalls mitgeteilt werden, welche Maßnahme zu ergreifen ist, um eine Kalibrierung der physikalischen Einheit durchzuführen.

Optional gibt die Überprüfungseinheit eine Benachrichtigung oder eine Mitteilung nach einem erfolgreichen Kalibrieren der physikalischen Einheit aus. Die Information über die erfolgte Kalibrierung kann somit weiterverarbeitet werden, insbesondere durch die Überprüfungseinheit. Das Zeitintervall für die zeitbasierte Kalibrierung kann neu gestartet werden.

Grundsätzlich kann die Benachrichtigung an einen Nutzer erfolgen, der dann zumindest teilweise aktiv werden muss, wohingegen die Mitteilung für eine automatisierte Verarbeitung der Information über die erfolgte Kalibrierung vorgesehen ist. Beispielsweise kann bei der automatisierten Verarbeitung ein nachfolgender Prozess automatisiert gestartet werden.

Gemäß einem Aspekt ist die Überprüfungseinheit mit einem Datenspeicher gekoppelt, in der die ermittelten Kompensationsdaten von der Überprüfungseinheit gespeichert werden. Eine Komponente, die die realen Messwerte der physikalischen Einheit im Betrieb empfängt, kann dann die Kompensationsdaten aus den Datenspeicher auslesen und zur Interpretation der realen Messwerte nutzen, damit die realen Messwerte basierend auf den zuvor ermittelten Kompensationsdaten kalibriert sind. So werden angepasste zuverlässige Messwerte ermöglicht, ohne dass ein Eingriff in die physikalische Einheit notwendig ist.

Gemäß einem weiteren Aspekt betrifft die Erfindung auch ein Computerprogrammprodukt, umfassend Befehle, die bei der Ausführung des Computerprogrammprodukts durch einen Prozessor diesen veranlassen, das zuvor beschriebene Verfahren zumindest teilweise auszuführen, insbesondere die Mess-, Simulations- und Rechenschritte. Die Vorteile, die durch das hierin beschriebene Verfahren erreicht werden, werden in entsprechender Weise auch durch das Computerprogrammprodukt erzielt.

Gemäß einem zusätzlichen Aspekt betrifft die Erfindung auch ein computerlesbares Speichermedium, umfassend Befehle, die bei der Ausführung des Computerprogrammprodukts durch einen Prozessor diesen veranlassen, das zuvor beschriebene Verfahren zumindest teilweise auszuführen, insbesondere die Mess-, Simulations- und Rechenschritte. Die Vorteile, die durch das hierin beschriebene Verfahren erreicht werden, werden in entsprechender Weise auch durch das computerlesbare Speichermedium erzielt.

Gemäß einem weiteren Aspekt wird die Aufgabe erfindungsgemäß gelöst durch ein System zum Kalibrieren und zur Justage einer physikalischen Einheit. Das System weist eine reale Prozessumgebung auf, in der die physikalische Einheit angeordnet ist. Das System weist wenigstens einen Prozessor auf, der eingerichtet ist, eine zur realen Prozessumgebung korrespondierend ausgebildete virtuelle Prozessumgebung zu simulieren, in der eine virtuelle Komponente vorgesehen ist. Das System ist eingerichtet, das zuvor beschriebene Verfahren auszuführen.

Die Vorteile, die durch das Verfahren erreicht werden, werden in entsprechender Weise auch durch das System erzielt. Insbesondere kann die Effizienz der physikalischen Einheit gegenüber bisherigen Ansätzen erhöht werden, da die physikalische Einheit auf Basis einer virtuellen Komponente kalibriert wird, wodurch diese nicht aus einer Anlage für die Kalibrierung entfernt werden muss.

Insbesondere ist der Prozessor eingerichtet, die virtuelle Komponente in einer Cloud-Umgebung zu simulieren. Dadurch wird ein dezentraler Zugriff auf die virtuelle Komponente ermöglicht, sodass die Simulationstopologie für die Kalibrierung unterschiedlicher physikalischer Einheiten genutzt werden kann.

Die Überprüfungseinheit kann die Kalibrierung und/oder Justage der physikalischen Einheit koordinieren.

Hierzu kann die Überprüfungseinheit als eigenständiger Dienst in der Simulationstopologie ausgebildet sein, also beispielsweise innerhalb der Cloud, auf einem Server oder auf einem Edge-Gerät.

Alternativ kann die Überprüfungseinheit auch als Software-Modul und/oder Hardware-Modul in einer Leitstelle ausgebildet sein, die mit der physikalischen Einheit bzw. der Anlage gekoppelt ist, in der die physikalische Einheit vorgesehen ist.

Grundsätzlich ist es möglich, dass die virtuelle Komponente und die virtuelle Umgebung, also die virtuelle Prozessumgebung und/oder die virtuelle Laborumgebung, eine Simulation sind. Dies bedeutet, dass die virtuellen Messwerte, die den Sollwerten für die physikalische Einheit entsprechen, für die Vergangenheit, für die Gegenwart und/oder für die Zukunft simuliert werden können.

Die Kompensationsdaten und/oder die Referenz-Kompensationsdaten können mithilfe einer künstlichen Intelligenz ermittelt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Fig. 1 ein erfindungsgemäßes System zum Kalibrieren und zur Justage einer physikalischen Einheit,
- Fig. 2 ein weiteres erfindungsgemäßes System zum Kalibrieren und zur Justage einer physikalischen Einheit, und
- Fig. 3 eine Übersicht eines erfindungsgemäßen Verfahrens zum Kalibrieren einer physikalischen Einheit.

Alle nachstehend in Bezug auf die Ausführungsbeispiele und/oder die begleitenden Figuren genannten Merkmale können allein oder in einer beliebigen Unterkombination mit Merkmalen der Erfindung, einschließlich Merkmalen bevorzugter Ausführungsformen, kombiniert werden.

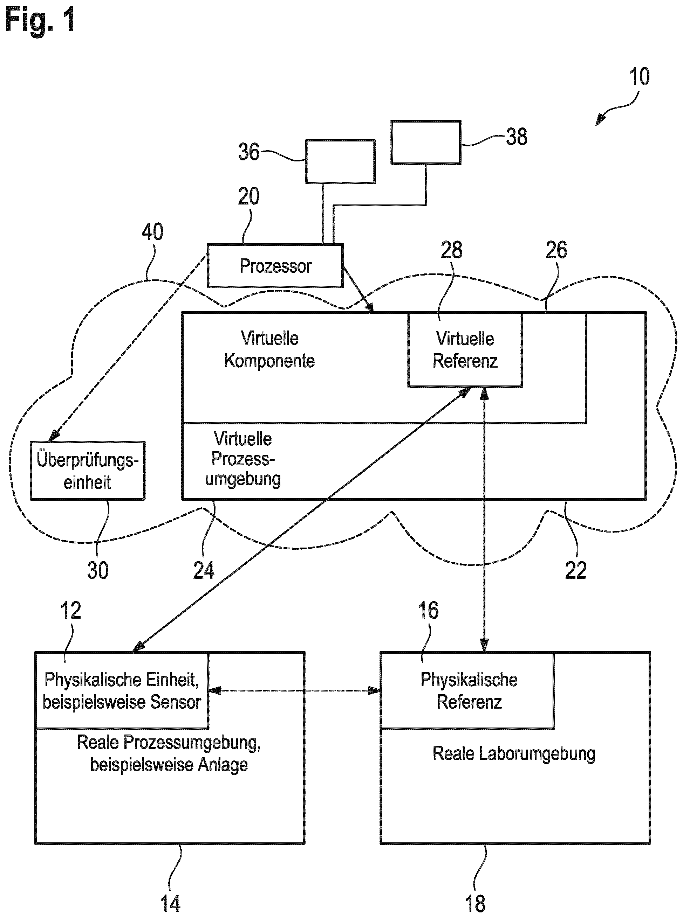

Fig. 1 zeigt ein System 10 zum Kalibrieren und zur Justage einer physikalischen Einheit 12 gemäß einer Ausführungsform.

Das System 10 umfasst die physikalische Einheit 12, die eine Messeinheit umfassen kann, beispielsweise einen Sensor oder ein Sensor-Aktor-System.

Die physikalische Einheit 12 ist in einer realen Prozessumgebung 14 angeordnet, also beispielsweise in einer Anlage wie einer Prozessanlage implementiert.

Der physikalischen Einheit 12 ist eine physikalische Referenz 16 zugeordnet. Die physikalische Referenz 16 ist in einer realen Laborumgebung 18 angeordnet. Insofern ist sichergestellt, dass die physikalische Referenz 16 für die physikalische Einheit 12 stets die wahren Werte liefert. Mit anderen Worten stellt die physikalischen Referenz 16 eine Urreferenz dar.

Während in der realen Laborumgebung 18 definierte und gleichbleibende Umgebungsbedingungen für die physikalische Referenz 16 herrschen, weist die reale Prozessumgebung 14 davon abweichende und insbesondere variierende Umgebungsbedingungen auf, die sich auf die Funktionsweise der physikalischen Einheit 12 auswirken. Obwohl die physikalische Einheit 12 generell eine Funktionsweise aufweist, die mit der Funktionsweise der physikalischen Referenz 16 übereinstimmt, führen die abweichenden und variierenden Umgebungsbedingungen dennoch für die physikalische Einheit 12 zu Messwerten, die von den Referenzwerten der physikalischen Referenz 16 abweichen.

Zusätzlich unterscheidet sich die physikalische Referenz 16 von der physikalischen Einheit 12 dahingehend, dass die Messgenauigkeit der physikalischen Referenz 16 zumindest um einen Faktor 10 höher ist als die Messgenauigkeit der physikalischen Einheit 12. Daher könnte die physikalische Referenz 16 als Kalibrierungsvorrichtung genutzt werden.

Das System 10 umfasst gemäß der vorliegenden Ausführungsform einen Prozessor 20, der genutzt wird, um eine virtuelle Umgebung 22 zu simulieren.

Die virtuelle Umgebung 22 entspricht in dem in Figur 1 gezeigten Beispiel einer virtuellen Prozessumgebung 24, durch die die reale Prozessumgebung 14 nachgebildet wird, in der die physikalische Einheit 12 angeordnet ist. Insbesondere werden die in der realen Prozessumgebung 14 herrschenden, evtl. variierenden, Umgebungsbedingungen innerhalb der virtuellen Prozessumgebung 24 nachgebildet.

Ferner wird durch den Prozessor 20 zumindest eine virtuelle Komponente 26 simuliert, die in der virtuellen Prozessumgebung 24 angeordnet ist. Das bedeutet, dass die virtuelle Komponente 26 den in der virtuellen Prozessumgebung 24 nachgebildeten variierenden Umgebungsbedingungen ausgesetzt ist. Die virtuelle Komponente 26 ist also den Umgebungsbedingungen ausgesetzt, denen auch die physikalische Einheit 12 ausgesetzt ist, da die virtuelle Prozessumgebung 24 eine Nachbildung der realen Prozessumgebung 14 ist.

Gemäß dem Ausführungsbeispiel aus Fig. 1 handelt es sich bei der virtuellen Komponente 26 um eine virtuelle Referenz 28, die der realen Referenz 16 nachgebildet, aber in der Nachbildung der realen Prozessumgebung 14 angeordnet ist, also der virtuellen Prozessumgebung 24. Die virtuelle Referenz 28 ist also nicht in einer virtuellen Laborumgebung angeordnet, sodass die virtuelle Referenz 28 anderen Bedingungen als die reale Referenz 16 ausgesetzt ist.

Die virtuelle Referenz 28 zeigt vielmehr in der virtuellen Prozessumgebung 24 ein korrespondierendes Verhalten zur physikalischen Referenz 16, wenn diese in der realen Prozessumgebung 14 angeordnet wäre. Mit anderen Worden wird simuliert, wie sich die physikalische Referenz 16 in einer anderen Umgebung verhält, nämlich in der realen Prozessumgebung 14.

Da sich die reale Prozessumgebung 14 von der realen Laborumgebung 18 unterscheidet, beispielsweise hinsichtlich der Umgebungsbedingungen, ergibt sich ein Umgebungsoffset, der berücksichtigt wird, damit sich die virtuelle Referenz 28 in der virtuellen Prozessumgebung 24 korrespondierend zur physikalischen Referenz 16 in der realen Prozessumgebung 14 verhält.

Selbstverständlich ist die virtuelle Referenz 28 derart ausgebildet, dass sie ebenfalls eine hohe Genauigkeit aufweist, die mit der Genauigkeit der physikalischen Referenz 16 korrespondiert.

Zusätzlich ist eine Überprüfungseinheit 30 vorgesehen, die beispielsweise durch den Prozessor 20 bereitgestellt wird, also als ein Software-basiertes Modul, was vorliegend durch den gestrichelten Pfeil dargestellt ist. Beispielsweise ist die Überprüfungseinheit 30 ein Service, der auf dem Prozessor 20 ausgeführt wird. Alternativ kann die Überprüfungseinheit 30 ein Hardware-Modul sein, das an einem bestimmten Ort vorgesehen ist, insbesondere als Teil der Anlage, in der die physikalische Einheit 12 implementiert ist, oder in einer Leitstelle.

Da sich die virtuelle Komponente 26, also die virtuelle Referenz 28, in der virtuellen Prozessumgebung 24 korrespondierend zur physikalischen Referenz 16 in der realen Prozessumgebung 14 verhält, kann die virtuelle Komponente 26 von der Überprüfungseinheit 30 zur Kalibrierung der physikalischen Einheit 12 in der realen Prozessumgebung 14 verwendet werden.

Dabei kann die Überprüfungseinheit 30 optional zunächst die virtuelle Referenz 28 mit der physikalischen Referenz 16 abgleichen, um sicherzustellen, dass die virtuelle Referenz 28 die gleichen Werte wie die physikalische Referenz 16 in der gleichen Umgebung liefert, beispielsweise in der Laborumgebung.

Insofern hat die Überprüfungseinheit 30 unter anderem Zugriff auf die physikalische Einheit 12, die physikalische Referenz 16 sowie die virtuelle Komponente 26, insbesondere den jeweiligen Mess- bzw. Referenzwerten.

Die Überprüfungseinheit 30 kann einen virtuellen Messwert von der virtuellen Komponente 26 erhalten. Dazu beaufschlagt die Überprüfungseinheit 30 die jeweilige virtuelle Komponente 26 mit Daten, präziser ausgedrückt mit Eingangsdaten, der physikalischen Einheit 12, also den Daten basierend auf denen die physikalische Einheit 12 reale Messwerte ausgibt. Da die virtuelle Prozessumgebung 24 generell korrespondierend zur realen Prozessumgebung 14 ausgebildet ist, sollte sich im Idealfall, also im kalibrierten Zustand der physikalischen Einheit 12, ein virtueller Messwert der virtuellen Komponente 26 ergeben, der mit dem realen Messwert der physikalischen Einheit 12 übereinstimmt.

Ein Offset zwischen dem realen Messwert (Istwert), der anhand der physikalischen Einheit 12 erfasst wird, und dem virtuellen Messwert (Sollwert), der durch die virtuelle Komponente 26 bereitgestellt wird, ist gleichbedeutend mit einer Zustandsänderung der physikalischen Einheit 12, die dazu führt, dass die physikalische Einheit 12 als nicht mehr kalibriert angesehen werden kann.

Der Offset kann dann von der Überprüfungseinheit 30 genutzt werden, um Kompensationsdaten zu ermitteln, die bei der Erfassung von zukünftigen realen Messwerten durch die physikalische Einheit 12 zu berücksichtigen sind, um das Verhalten der physikalischen Einheit 12 an das Verhalten der virtuellen Komponente 26 anzupassen. Dadurch wird eine Kalibrierung der physikalischen Einheit 12 ermöglicht, die ohne Deaktivierung und/oder Ausbau der physikalischen Einheit 12 aus der realen Prozessumgebung 14 ermöglicht wird. Ein unmittelbarer Abgleich der physikalischen Einheit 12 mit der physikalischen Referenz 16 in der realen Laborumgebung 18 ist also nicht notwendig.

Somit können die Ausfallzeiten der physikalischen Einheit 12 und der Anlage, in der die physikalische Einheit 12 angeordnet ist, minimiert oder gar ganz vermieden werden, sodass die Betriebseffizienz erhöht werden kann.

Das System 10 weist ferner zumindest eine Nutzerschnittstelle 36 auf, die hier zumindest mit dem Prozessor 20 gekoppelt ist, da die Überprüfungseinheit 30 in Software implementiert ist. Falls die Überprüfungseinheit 30 zumindest teilweise in Hardware implementiert ist, kann die Nutzerschnittstelle 36 auch alternativ oder zusätzlich zum Prozessor 20 an der Überprüfungseinheit 30 vorgesehen sein.

Anhand der Nutzerschnittstelle 36 kann die Überprüfungseinheit 30 Benachrichtigungen für einen Nutzer des Systems 10 ausgeben oder Nutzereingaben empfangen, beispielsweise um Parameter zu spezifizieren.

Zusätzlich weist das System 10 auch zumindest einen Datenspeicher 38 auf, der zumindest mittelbar mit der Überprüfungseinheit 30 gekoppelt ist. In den Datenspeicher 38 können die von der Überprüfungseinheit 30 ermittelten Kompensationsdaten abgespeichert werden, damit sie von dem Nutzer oder einer nachgelagerten Komponente, beispielsweise einer Auswertevorrichtung, für die Interpretation der realen Messwerte, die anhand der physikalischen Einheit 12 erfasst werden, genutzt werden können. Dadurch kann verhindert werden, dass die intrinsischen Parameter der physikalischen Einheit 12 geändert werden müssen. Vielmehr können die Kompensationsdaten, die den Ausgleich des ermittelten Offsets ermöglichen, aus dem Datenspeicher 38 ausgelesen und bei der Interpretation der realen Messwerte der physikalischen Einheit 12 berücksichtigt werden.

Darüber hinaus ist in Figur 1 gezeigt, dass die virtuelle Umgebung 22 sowie die Überprüfungseinheit 30 in einer Cloud-Umgebung 40 simuliert sind. Insofern kann der Prozessor 20 Teil eines Servers sein.

Alternativ ist der Prozessor 20 in einem Edge-Gerät vorgesehen sein.

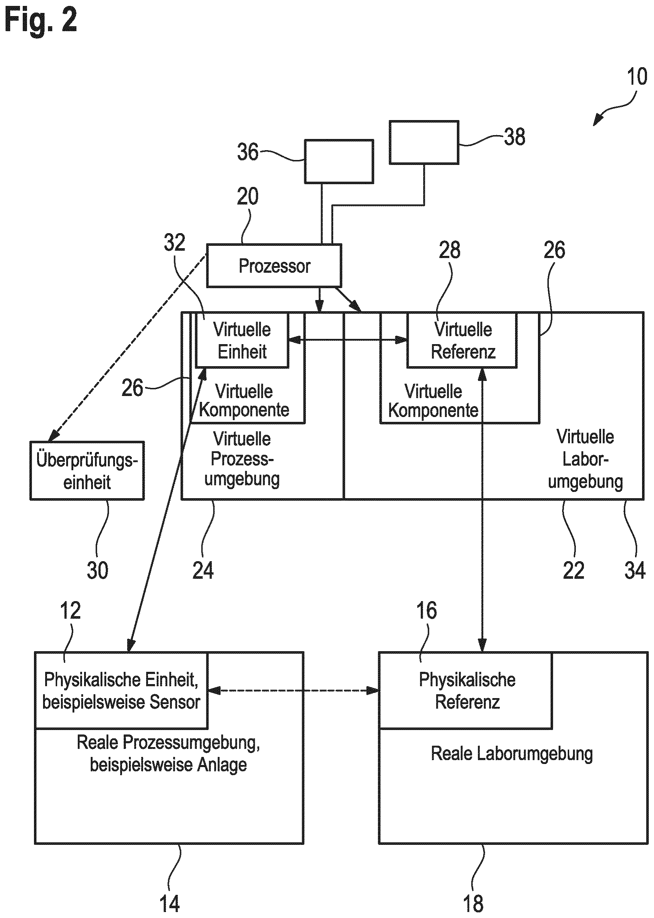

In Fig. 2 ist ein Ausführungsbeispiel des Systems 10 gezeigt, bei dem die virtuelle Umgebung 22 von der virtuellen Umgebung 22 aus Fig. 1 dahingehend abweicht, dass die virtuelle Komponente 26 nunmehr eine virtuelle Einheit 32 ist, die korrespondierend zur physikalischen Einheit 12 ausgebildet ist. Dabei ist die virtuelle Einheit 32 in der virtuellen Prozessumgebung 24 angeordnet.

Zusätzlich weicht die virtuelle Umgebung 22 aus Fig. 2 von der virtuellen Umgebung 22 aus Fig. 1 dahingehend ab, dass innerhalb der virtuellen Umgebung 22 eine zusätzliche virtuelle Laborumgebung 34 durch den Prozessor 20 simuliert wird. Die virtuelle Laborumgebung 34 ist korrespondierend zur realen Laborumgebung 18 ausgebildet.

In diesem Fall kann durch den Prozessor 20 zusätzlich zur virtuellen Einheit 32 eine weitere virtuelle Komponente 26 in Form einer virtuellen Referenz 28 simuliert werden, die der virtuellen Einheit 32 zugeordnet und innerhalb der virtuellen Laborumgebung 34 angeordnet ist. Die virtuelle Referenz 28 ist korrespondierend zur physikalischen Referenz 16 ausgebildet.

Gemäß der spezifischen Ausbildung der virtuellen Umgebung 22 aus Fig. 2 ist jeder physikalischen Komponente, also der physikalischen Einheit 12 sowie der physikalischen Referenz 16, ein digitaler Zwilling zugeordnet, nämlich die virtuelle Einheit 32 sowie die virtuelle Referenz 28.

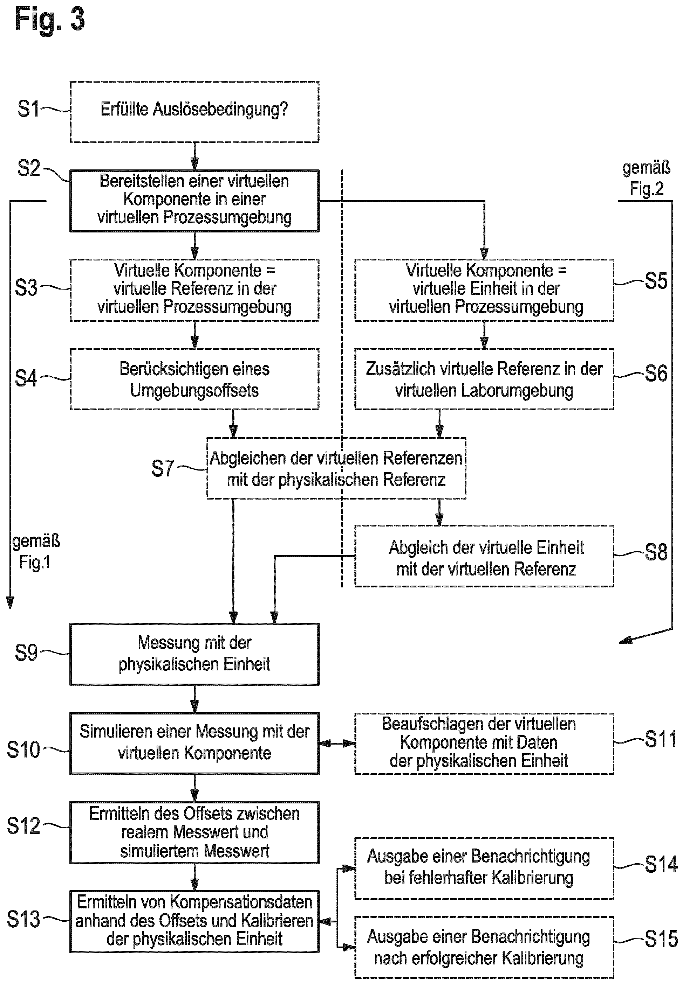

Die Unterschiede zwischen dem beiden Systemen 10 wird anhand der Figur 3 deutlich, die eine Übersicht eines Verfahrens zum Kalibrieren einer physikalischen Einheit 12 zeigt. Optionale Schritte sind gestrichelt dargestellt.

In einem ersten Schritt S1 überprüft die Überprüfungseinheit 30 ob eine Auslösebedingung für das Verfahren erfüllt ist, also ob eine Kalibrierung der physikalischen Einheit 12 anhand der virtuellen Komponente 26 auszulösen ist.

Die Auslösebedingung kann darauf basieren, dass ein regelmäßiges, vorgebbares Zeitintervall verstrichen ist, also zeitbasiert. Das vorgebbare Zeitintervall kann durch einen Nutzer des Systems 10 beispielsweise anhand der Nutzerschnittstelle 36 vorgegeben werden.

In einer Alternative kann die Auslösebedingung eventbasiert anhand eines Differenzschwellenwert ermittelt werden. In diesem Fall bestimmt die Überprüfungseinheit 30 den Offset zwischen dem anhand der physikalischen Einheit 12 erfassten realen Messwert und dem anhand der virtuellen Komponente 26 simulierten virtuellen Messwert wiederholt und vergleicht den Offset mit dem Differenzschwellenwert. Ist der so ermittelte Offset größer/kleiner (je nach Vorzeichen) als der Differenzschwellenwert, kann die Auslösebedingung erfüllt sein. Selbstverständlich kann der Differenzschwellenwert durch einen Nutzer des Systems 10 vorgegeben werden, beispielsweise anhand der Nutzerschnittstelle 36.

In einer weiteren Alternative kann die Auslösebedingungen ebenfalls eventbasiert unmittelbar als Resultat einer Nutzereingabe über die Nutzerschnittstelle 36 ausgelöst werden. Auch können die Auslösebedingungen eventbasiert durch ein Auslösesignal einer weiteren Komponente, beispielsweise einer übergeordneten Steuervorrichtung, erfüllt werden.

Im nachfolgenden Schritt S2 des Verfahrens wird die virtuellen Komponente 26 bereitgestellt, die in der virtuellen Prozessumgebung 24 ausgebildet ist.

Die virtuelle Komponente 26 kann auf zwei verschiedene Weisen implementiert sein.

Gemäß dem Schritt S3 ist die virtuelle Komponente 26 eine virtuelle Referenz 28, die in der virtuellen Prozessumgebung 24 ausgebildet ist, wie dies in Figur 1 gezeigt ist. Die virtuelle Referenz 28 ist in der virtuellen Prozessumgebung 24 derart ausgebildet, dass dadurch die physikalische Referenz 16, die der physikalischen Einheit 12 zugeordnet ist, nachgebildet wird. Während also die physikalische Referenz 16 in der realen Laborumgebung 18 angeordnet ist, ist die virtuelle Referenz 28 in diesem Fall in der virtuellen Prozessumgebung 24 angeordnet.

Dementsprechend kann der Schritt S3 durch den Schritt S4 weitergebildet werden, in dem das Verhalten der physikalischen Referenz 16 in der realen Prozessumgebung 14 durch die virtuelle Referenz 28 in der virtuellen Prozessumgebung 24 simuliert wird. Um dies zu ermöglichen, kann im Rahmen des Schritts S4 insbesondere ein Umgebungsoffset durch die Überprüfungseinheit 30 berücksichtigt werden, der die Differenz zwischen der realen Prozessumgebung 14 und der realen Laborumgebung 18 widerspiegelt.

In einer Alternative zu den Schritten S3 und S4, kann die virtuelle Komponente 26 nachfolgend zum Schritt S2 im Schritt S5 auch als virtuelle Einheit 32 ausgebildet sein, die in der virtuellen Prozessumgebung 24 angeordnet ist, wie dies in Figur 2 gezeigt ist.

Die virtuelle Einheit 32 wird durch den Prozessor 20 derart simuliert, dass sie typgleich zur physikalischen Einheit 12 eingerichtet ist. Da die virtuelle Prozessumgebung 24 der realen Prozessumgebung 14 nachempfunden ist, verhält sich die virtuelle Einheit 32 in der virtuellen Prozessumgebung 24 deshalb korrespondierend zur physikalischen Einheit 12 in der realen Prozessumgebung 14. Die virtuelle Einheit 32 wird auch als digitaler Zwilling der physikalischen Einheit 12 bezeichnet.

Gemäß dieser Ausgestaltung der virtuellen Umgebung 22 kann durch den Prozessor 20 eine virtuelle Referenz 28 entsprechend dem Schritt S6 simuliert werden, die in einer virtuellen Laborumgebung 34 angeordnet ist. Die virtuelle Laborumgebung 34 ist der realen Laborumgebung 18 nachempfunden. Die virtuelle Referenz 28 ist korrespondierend zur physikalischen Referenz 16 ausgebildet. Dadurch verhält sich die virtuelle Referenz 28 in der virtuellen Laborumgebung 34 korrespondierend zur physikalischen Referenz 16 in der realen Laborumgebung 18. Die virtuelle Referenz 28 wird auch als digitaler Zwilling der physikalischen Referenz 16 bezeichnet.

Ausgehend von den unterschiedlichen Ausgestaltungen der virtuellen Umgebung 22 entsprechend der Schritte S4 oder S6, umfasst das Verfahren dann den nachfolgenden Schritt S7.

Im Schritt S7 gleicht die Überprüfungseinheit 30 die virtuelle Referenz 28 mit der physikalischen Referenz 16 ab. Hierbei ist die Umgebung der virtuellen Referenz 28 zu berücksichtigen. Die physikalische Referenz 16 ist in jedem Fall in der realen Laborumgebung 18 angeordnet. Die virtuelle Referenz 28 kann jedoch entweder in der virtuellen Prozessumgebung 24 (Schritt S3 und S4 gemäß Figur 1) oder in der virtuellen Laborumgebung 34 angeordnet sein (Schritt S5 und S6 gemäß Figur 2). Folglich ist beim Abgleich der virtuellen Referenz 28 mit der physikalischen Referenz 16 je nach Konfiguration ein Umgebungsoffset zu berücksichtigen.

In einer Ausgestaltung der virtuellen Umgebung 22, in der keine virtuelle Referenz 28 vorgesehen ist, sondern lediglich eine in der virtuellen Prozessumgebung 24 angeordnete virtuelle Einheit 32, durch die die virtuelle Komponente 26 ausgebildet wird (also ohne den Schritt S6), gleicht die Überprüfungseinheit 30 die entsprechende virtuelle Einheit 32 mit der physikalischen Referenz 16 ab. Da die virtuelle Einheit 32 in der virtuellen Prozessumgebung 24 angeordnet ist, ist dabei ebenfalls ein Umgebungsoffset zu berücksichtigen, der die Unterschiede zwischen der realen Prozessumgebung 14 und der realen Laborumgebung 18 widerspiegelt.

Weist die virtuelle Umgebung 22 sowohl eine virtuelle Einheit 32 als auch eine virtuelle Referenz 28 auf, so kann das Verfahren nachfolgend zum Schritt S7 den Schritt S8 umfassen, in dem die Überprüfungseinheit 30 die virtuelle Einheit 32 mit der virtuellen Referenz 28 abgleicht. Dabei berücksichtigt die Überprüfungseinheit 30, dass die virtuelle Einheit 32 in der virtuellen Prozessumgebung 24 angeordnet ist, während die virtuelle Referenz 28 in der virtuellen Laborumgebung 34 angeordnet ist. Insofern kann auch hier wieder ein Umgebungsoffset berücksichtigt werden.

Je nach Ausgestaltung der virtuellen Umgebung 22 schließt sich an den Schritt S7 oder den Schritt S8 der Schritt S9 an. Im Schritt S9 wird eine Messung mit der physikalischen Einheit 12 durchgeführt, um einen realen Messwert zu erhalten. Die Messung kann von der Überprüfungseinheit 30 durchgeführt oder zumindest ausgelöst werden.

Im Anschluss wird im Schritt S10 durch die Überprüfungseinheit 30 eine Messung mit der virtuellen Komponente 26 in der virtuellen Prozessumgebung 24 simuliert, um einen virtuellen Messwert zu erhalten. Selbstverständlich wird dabei ein virtueller Messwert durch die Überprüfungseinheit 30 derart erhalten, dass dieser korrespondierend zum erfassten realen Messwert aus dem vorhergehenden Schritt S9 ist.

Der Schritt S10 kann dabei durch den Schritt S11 weitergebildet werden, indem die Überprüfungseinheit 30 die virtuelle Komponente 26 mit Daten der physikalischen Einheit 12 beaufschlagt, um den virtuellen Messwert zu erhalten. Das bedeutet, dass die Überprüfungseinheit 30 die Eingangsdaten oder Eingangssignale der physikalischen Einheit 12 nutzt, um die virtuelle Komponente 26 mit den gleichen Daten zu beaufschlagen, und den virtuellen Messwert basierend auf diesen Daten zu erhalten.

Im Anschluss an den Schritt S10 umfasst das Verfahren den Schritt S12, in dem die Überprüfungseinheit 30 einen Offset basierend auf einem Vergleich des im Schritt S9 erhaltenen realen Messwerts und des im Schritt S10 erhaltenen virtuellen Messwerts ermittelt.

Im nachfolgenden Schritt S13 bestimmt die Überprüfungseinheit 30 auf Basis des ermittelten Offsets etwaige Kompensationsdaten für zukünftige Messwerte der physikalischen Einheit 12. Die ermittelten Kompensationsdaten werden dann zur Kompensation der physikalischen Einheit 12 durch die Überprüfungseinheit 30 genutzt. Die Kompensationsdaten können auch für vergangene Messwerte der physikalischen Einheit 12 genutzt werden, also nachträglich.

Das bedeutet, dass zukünftige reale Messwerte, die anhand der physikalischen Einheit 12 erfasst werden, und/oder bereits erhaltene Messwerte mithilfe der Kompensationsdaten (nachträglich) kalibriert werden. Dadurch kann die Zuverlässigkeit der erfassten realen Messwerte gewährleistet werden. Insbesondere wird so eine Kalibrierung der physikalischen Einheit 12 ermöglicht, ohne dass diese aus der realen Prozessumgebung 14 entfernt und mit der physikalischen Referenz 16 abgeglichen werden muss.

Bevorzugt kann die Überprüfungseinheit 30 die ermittelten Kompensationsdaten für einen Nutzer ausgeben oder für andere Komponenten hinterlegen, beispielsweise im Datenspeicher 38.

Das Verfahren kann zusätzlich durch den optionalen Schritt S14 weitergebildet werden, in dem die Überprüfungseinheit 30 eine Benachrichtigung oder Mitteilung für den Fall einer fehlerhaften Kalibrierung ausgibt.

Die Benachrichtigung kann von der Überprüfungseinheit 30 mithilfe der Nutzerschnittstelle 36 an den Nutzer ausgegeben werden. Alternativ kann mithilfe einer Kommunikationsschnittstelle eine Mitteilung in Form eines Signals für andere Komponenten bereitgestellt werden, um eine (teil-)automatisierte Weiterverarbeitung zu ermöglichen. Die Mitteilung kann von der Überprüfungseinheit 30 an eine externe Komponente, wie eine Leitstelle der Anlage ausgegeben werden, von der die physikalische Einheit 12 ein Teil ist.

Eine fehlerhafte Kalibrierung liegt insbesondere vor, falls:
- von der Überprüfungseinheit 30 ermittelt wird, dass nach dem Ermitteln entsprechender Kompensationsdaten erneut ein nicht vernachlässigbarer Offset zwischen einem erneut erfassten realen Messwert und einem dazu korrespondierenden virtuellen Messwert innerhalb eines vorgegebenen Zeitintervalls festgestellt wird, und/oder
- eine der physikalischen Einheit 12 zugeordnete virtuelle Referenz 28 nicht erreichbar ist, und/oder
- eine einer virtuellen Einheit 32 zugeordnete virtuelle Referenz 28 eine Fehlerbenachrichtigung ausgibt, und/oder
- die virtuelle Einheit 32 nicht erreichbar ist bzw. nicht existiert, und/oder
- die virtuelle Einheit 32 eine Fehlerbenachrichtigung ausgibt.

All diese Ereignisse führen dazu, dass keine zuverlässige und für zumindest ein gewisses Zeitintervall belastbare Kalibrierung der physikalischen Einheit 12 möglich ist. Daher ist hier von einer fehlerhaften Kalibrierung auszugehen.

Optional kann die Überprüfungseinheit 30 im Schritt S14 innerhalb der ausgegebenen Benachrichtigung oder Mitteilung den Hinweis bereitstellen, dass die physikalische Einheit 12 mit der physikalischen Referenz 16 zu kalibrieren ist, und/oder dass eine Justage der physikalischen Einheit 12 zu erfolgen hat.

Das Verfahren umfasst jedoch auch den Schritt S15, in dem die Überprüfungseinheit 30 eine Benachrichtigung oder einer Mitteilung ausgibt, sofern die Kalibrierung der physikalischen Einheit 12 erfolgreich ist. Die Annahme, dass die Kalibrierung erfolgreich abgeschlossen ist, kann darauf beruhen, dass die Überprüfungseinheit 30 feststellt, dass nach erfolgter Kalibrierung keine Abweichung oder eine zulässige Abweichung vorliegt.

Insbesondere auf Basis der Mitteilung entsprechend der Schritte S14 und S15 wird eine Prozessautomatisierung hinsichtlich der physikalischen Einheit 12 ermöglicht, einschließlich deren Kalibrierung. Dabei kann im Rahmen der Prozessautomatisierung eine der hinsichtlich des Schritts S1 skizzierten Auslösebedingungen berücksichtigt werden.

Der Unterschied zwischen dem in Figur 1 gezeigten System 10 und dem in Figur 2 gezeigten System 10 schlägt sich im Verfahren dahingehend nieder, dass die virtuelle Einheit 32 ständig mit der virtuellen Referenz 28 kalibriert wird, sodass sich die virtuelle Einheit 32 stets in einem kalibrierten Zustand befindet.

Sofern im Schritt S12 festgestellt wird, dass ein Offset zwischen der virtuellen Einheit 32 und der physikalischen Einheit 12 vorliegt, kann eine Synchronisierung der virtuellen Einheit 32 und der physikalischen Einheit 12 erfolgen. Hierdurch findet eine Kalibrierung statt, da die virtuelle Einheit 32 zuvor mittels der virtuellen Referenz 28 bereits kalibriert worden ist.

Grundsätzlich ist vorgesehen, dass die virtuelle Referenz 28 ständig mit der physikalischen Referenz 16 abgeglichen wird, um zu gewährleisten, dass die wahren Werte stets auch in der virtuellen Umgebung 22 zur Verfügung stehen, mittels der die physikalische Einheit 12 kalibriert wird. Dies ermöglicht die Kalibrierung der physikalischen Einheit 12, ohne diese aus der Anlage auszubauen, wodurch die Effizienz entsprechend gesteigert wird.

## Patentansprüche

1. Verfahren zum Kalibrieren einer physikalischen Einheit (12), die in einer realen Prozessumgebung (14) angeordnet ist, wobei das Verfahren zumindest die folgenden Schritte umfasst:
- Bereitstellen einer virtuellen Komponente (26), die in einer virtuellen Prozessumgebung (24) ausgebildet ist, wobei die virtuelle Prozessumgebung (24) korrespondierend zur realen Prozessumgebung (14) ausgebildet ist, sodass sich die in der realen Prozessumgebung (14) angeordnete physikalische Einheit (12) korrespondierend zur virtuellen Komponente (26) in der virtuellen Prozessumgebung (24) verhält,
- Durchführen einer Messung mit der physikalischen Einheit (12), um einen realen Messwert zu erhalten,
- Simulieren einer Messung mit der virtuellen Komponente (26), um einen virtuellen Messwert zu erhalten,
- Ermitteln eines Offsets durch eine Überprüfungseinheit (30) basierend auf einem Vergleich des realen Messwerts und des virtuellen Messwerts, wobei der reale Messwert und der virtuelle Messwert korrespondierend sind, und
- Kalibrieren der physikalischen Einheit (12) durch die Überprüfungseinheit (30) anhand des Offsets zumindest derart, dass auf dem Offset basierende Kompensationsdaten für zukünftige Messwerte der physikalischen Einheit (12) berücksichtigt werden.

2. Verfahren nach Anspruch 1, **dadurch gekennzeichnet, dass** die virtuelle Komponente (26) eine virtuelle Referenz (28) ist, die einer der physikalischen Einheit (12) zugeordneten physikalischen Referenz (16) nachgebildet ist, wobei die physikalische Referenz (16) in einer realen Laborumgebung (18) angeordnet ist, wohingegen die virtuelle Referenz (28) in der virtuellen Prozessumgebung (24) angeordnet ist, und wobei sich die reale Prozessumgebung (14) von der realen Laborumgebung (18) unterscheidet.

3. Verfahren nach Anspruch 2, **dadurch gekennzeichnet, dass** das Verhalten der physikalischen Referenz (16) in der realen Prozessumgebung (14) durch die virtuelle Referenz (28) in der virtuellen Prozessumgebung (24) simuliert wird.

4. Verfahren nach Anspruch 1, **dadurch gekennzeichnet, dass** die virtuelle Komponente (26) eine virtuelle Einheit (32) ist, die der physikalischen Einheit (12) nachgebildet ist, wobei die virtuelle Einheit (32) in der virtuellen Prozessumgebung (24) ausgebildet ist, sodass sich die in der virtuellen Prozessumgebung (24) ausgebildete virtuelle Einheit (32) korrespondierend zu der in der realen Prozessumgebung (14) angeordneten physikalischen Einheit (12) verhält.

5. Verfahren nach Anspruch 4, **dadurch gekennzeichnet, dass** eine virtuelle Referenz (28) vorgesehen ist, die einer der physikalischen Einheit (12) zugeordneten physikalischen Referenz (16) nachgebildet ist, wobei die physikalische Referenz (16) in einer realen Laborumgebung (18) angeordnet ist, wohingegen die virtuelle Referenz (28) in einer virtuellen Laborumgebung (34) angeordnet ist, die korrespondierend zur realen Laborumgebung (18) ausgebildet ist, und wobei sich die reale Prozessumgebung (14) von der realen Laborumgebung (18) unterscheidet.

6. Verfahren nach Anspruch 5, **dadurch gekennzeichnet, dass** sich die virtuelle Referenz (28) in der virtuellen Laborumgebung (34) korrespondierend zur physikalischen Referenz (16) in der realen Laborumgebung (18) verhält.

7. Verfahren nach Anspruch 5 oder 6, **dadurch gekennzeichnet, dass** die Überprüfungseinheit (30), vor dem Kalibrieren der physikalischen Einheit (12) mittels der virtuellen Einheit (32), die virtuelle Einheit (32) mit der virtuellen Referenz (28) abgleicht.

8. Verfahren nach einem der Ansprüche 5 bis 7, **dadurch gekennzeichnet, dass** die Überprüfungseinheit (30) einen von der virtuellen Laborumgebung (34) der virtuellen Referenz (28) abhängigen Umgebungsoffset berücksichtigt.

9. Verfahren nach einem der vorherigen Ansprüche, **dadurch gekennzeichnet, dass** die Überprüfungseinheit (30) die physikalische Einheit (12) mit der virtuellen Komponente (26) kalibriert, sofern eine event- und/oder zeitbasierte Auslösebedingung erfüllt ist.

10. Verfahren nach einem der vorhergehenden Ansprüche, **dadurch gekennzeichnet, dass** die virtuelle Komponente (26) mit Daten der physikalischen Einheit (12) beaufschlagt wird, um virtuelle Messwerte zu erhalten.

11. Verfahren nach einem der vorherigen Ansprüche, **dadurch gekennzeichnet, dass** eine Justage der physikalischen Einheit (12) erfolgt, sofern die Kalibrierung der physikalischen Einheit (12) weiterhin einen Offset zur Folge hat.

12. Verfahren nach einem der vorherigen Ansprüche, **dadurch gekennzeichnet, dass** die Überprüfungseinheit (30) eine Benachrichtigung oder eine Mitteilung ausgibt, sofern ein Kalibrieren der physikalischen Einheit (12) anhand der virtuellen Komponente (26) fehlschlägt.

13. Verfahren nach einem der vorherigen Ansprüche, **dadurch gekennzeichnet, dass** die Überprüfungseinheit (30) eine Benachrichtigung oder eine Mitteilung nach einem erfolgreichen Kalibrieren der physikalischen Einheit (12) ausgibt.

14. Verfahren nach einem der vorherigen Ansprüche, **dadurch gekennzeichnet, dass** die Überprüfungseinheit (30) die Kalibrierung der physikalischen Einheit (12) mit der virtuellen Komponente (26):
- in regelmäßigen, vorgebbaren Zeitintervallen auslöst, und/oder
- auslöst, wenn die Überprüfungseinheit (30) feststellt, dass der Offset größer oder kleiner als ein vorgegebener Schwellenwert ist, und/oder
- als Reaktion auf eine Nutzereingabe auslöst.

15. System (10) zum Kalibrieren und zur Justage einer physikalischen Einheit (12), wobei das System (10) eine reale Prozessumgebung (14) aufweist, in der die physikalischen Einheit (12) angeordnet ist, und wobei das System (10) wenigstens einen Prozessor (20) aufweist, der eingerichtet ist, eine zur realen Prozessumgebung (14) korrespondierend ausgebildete virtuelle Prozessumgebung (24) zu simulieren, in der eine virtuelle Komponente (26) vorgesehen ist, wobei das System (10) eingerichtet ist, das Verfahren nach einem der vorhergehenden Ansprüche auszuführen.

## Geänderte Patentansprüche

### Geänderte Patentansprüche gemäss Regel 137(2) EPÜ.

1. Verfahren zum Kalibrieren einer physikalischen Einheit (12), die in einer realen Prozessumgebung (14) angeordnet ist, wobei das Verfahren zumindest die folgenden Schritte umfasst:
- Bereitstellen einer virtuellen Komponente (26), die in einer virtuellen Prozessumgebung (24) ausgebildet ist, wobei die virtuelle Prozessumgebung (24) korrespondierend zur realen Prozessumgebung (14) ausgebildet ist, sodass sich die in der realen Prozessumgebung (14) angeordnete physikalische Einheit (12) korrespondierend zur virtuellen Komponente (26) in der virtuellen Prozessumgebung (24) verhält, wobei die virtuelle Prozessumgebung (24) der realen Prozessumgebung (14) nachgebildet ist,
- Durchführen einer Messung mit der physikalischen Einheit (12), um einen realen Messwert zu erhalten,
- Simulieren einer Messung mit der virtuellen Komponente (26), um einen virtuellen Messwert zu erhalten,
- Ermitteln eines Offsets durch eine Überprüfungseinheit (30) basierend auf einem Vergleich des realen Messwerts und des virtuellen Messwerts, wobei der reale Messwert und der virtuelle Messwert korrespondierend sind, und
- Kalibrieren der physikalischen Einheit (12) durch die Überprüfungseinheit (30) anhand des Offsets zumindest derart, dass auf dem Offset basierende Kompensationsdaten für zukünftige Messwerte der physikalischen Einheit (12) berücksichtigt werden.

2. Verfahren nach Anspruch 1, **dadurch gekennzeichnet, dass** die virtuelle Komponente (26) eine virtuelle Referenz (28) ist, die einer der physikalischen Einheit (12) zugeordneten physikalischen Referenz (16) nachgebildet ist, wobei die physikalische Referenz (16) in einer realen Laborumgebung (18) angeordnet ist, wohingegen die virtuelle Referenz (28) in der virtuellen Prozessumgebung (24) angeordnet ist, und wobei sich die reale Prozessumgebung (14) von der realen Laborumgebung (18) unterscheidet.

3. Verfahren nach Anspruch 2, **dadurch gekennzeichnet, dass** das Verhalten der physikalischen Referenz (16) in der realen Prozessumgebung (14) durch die virtuelle Referenz (28) in der virtuellen Prozessumgebung (24) simuliert wird.

4. Verfahren nach Anspruch 1, **dadurch gekennzeichnet, dass** die virtuelle Komponente (26) eine virtuelle Einheit (32) ist, die der physikalischen Einheit (12) nachgebildet ist, wobei die virtuelle Einheit (32) in der virtuellen Prozessumgebung (24) ausgebildet ist, sodass sich die in der virtuellen Prozessumgebung (24) ausgebildete virtuelle Einheit (32) korrespondierend zu der in der realen Prozessumgebung (14) angeordneten physikalischen Einheit (12) verhält.

5. Verfahren nach Anspruch 4, **dadurch gekennzeichnet, dass** eine virtuelle Referenz (28) vorgesehen ist, die einer der physikalischen Einheit (12) zugeordneten physikalischen Referenz (16) nachgebildet ist, wobei die physikalische Referenz (16) in einer realen Laborumgebung (18) angeordnet ist, wohingegen die virtuelle Referenz (28) in einer virtuellen Laborumgebung (34) angeordnet ist, die korrespondierend zur realen Laborumgebung (18) ausgebildet ist, und wobei sich die reale Prozessumgebung (14) von der realen Laborumgebung (18) unterscheidet.

6. Verfahren nach Anspruch 5, **dadurch gekennzeichnet, dass** sich die virtuelle Referenz (28) in der virtuellen Laborumgebung (34) korrespondierend zur physikalischen Referenz (16) in der realen Laborumgebung (18) verhält.

7. Verfahren nach Anspruch 5 oder 6, **dadurch gekennzeichnet, dass** die Überprüfungseinheit (30), vor dem Kalibrieren der physikalischen Einheit (12) mittels der virtuellen Einheit (32), die virtuelle Einheit (32) mit der virtuellen Referenz (28) abgleicht.

8. Verfahren nach einem der Ansprüche 5 bis 7, **dadurch gekennzeichnet, dass** die Überprüfungseinheit (30) einen von der virtuellen Laborumgebung (34) der virtuellen Referenz (28) abhängigen Umgebungsoffset berücksichtigt.

9. Verfahren nach einem der vorherigen Ansprüche, **dadurch gekennzeichnet, dass** die Überprüfungseinheit (30) die physikalische Einheit (12) mit der virtuellen Komponente (26) kalibriert, sofern eine event- und/oder zeitbasierte Auslösebedingung erfüllt ist.

10. Verfahren nach einem der vorhergehenden Ansprüche, **dadurch gekennzeichnet, dass** die virtuelle Komponente (26) mit Daten der physikalischen Einheit (12) beaufschlagt wird, um virtuelle Messwerte zu erhalten.

11. Verfahren nach einem der vorherigen Ansprüche, **dadurch gekennzeichnet, dass** eine Justage der physikalischen Einheit (12) erfolgt, sofern die Kalibrierung der physikalischen Einheit (12) weiterhin einen Offset zur Folge hat.

12. Verfahren nach einem der vorherigen Ansprüche, **dadurch gekennzeichnet, dass** die Überprüfungseinheit (30) eine Benachrichtigung oder eine Mitteilung ausgibt, sofern ein Kalibrieren der physikalischen Einheit (12) anhand der virtuellen Komponente (26) fehlschlägt.

13. Verfahren nach einem der vorherigen Ansprüche, **dadurch gekennzeichnet, dass** die Überprüfungseinheit (30) eine Benachrichtigung oder eine Mitteilung nach einem erfolgreichen Kalibrieren der physikalischen Einheit (12) ausgibt.

14. Verfahren nach einem der vorherigen Ansprüche, **dadurch gekennzeichnet, dass** die Überprüfungseinheit (30) die Kalibrierung der physikalischen Einheit (12) mit der virtuellen Komponente (26):
- in regelmäßigen, vorgebbaren Zeitintervallen auslöst, und/oder
- auslöst, wenn die Überprüfungseinheit (30) feststellt, dass der Offset größer oder kleiner als ein vorgegebener Schwellenwert ist, und/oder
- als Reaktion auf eine Nutzereingabe auslöst.

15. System (10) zum Kalibrieren und zur Justage einer physikalischen Einheit (12), wobei das System (10) eine reale Prozessumgebung (14) aufweist, in der die physikalischen Einheit (12) angeordnet ist, wobei das System (10) wenigstens einen Prozessor (20) aufweist, der eingerichtet ist, eine zur realen Prozessumgebung (14) korrespondierend ausgebildete virtuelle Prozessumgebung (24) zu simulieren, in der eine virtuelle Komponente (26) vorgesehen ist, wobei das System (10) eingerichtet ist, das Verfahren nach einem der vorhergehenden Ansprüche auszuführen, und wobei die virtuelle Prozessumgebung (24) der realen Prozessumgebung (14) nachgebildet ist.
